# EUROPÄISCHE PATENTSCHRIFT

(11) **EP 0 913 899 B1**
(45) Veröffentlichungstag und Bekanntmachung des Hinweises auf die Patenterteilung: **10.03.2004**
(21) Anmeldenummer: 98119268.5
(22) Anmeldetag: 13.10.1998
(51) Int. Cl.: H02G 3/04, H02G 3/12

(54) **Verteilerschrank**
Distribution cabinet
Armoire de distribution

(30) Priorität: 30.10.1997 AT 67197 U
(43) Veröffentlichungstag der Anmeldung: 06.05.1999
(73) Patentinhaber: Kasper, Helmut, 6850 Dornbirn (AT)
(72) Erfinder: Kasper, Helmut, 6850 Dornbirn (AT)
(74) Vertreter: Hefel, Herbert, Dipl.-Ing.

(56) Entgegenhaltungen:
- EP-A- 0 240 916
- EP-A- 0 730 329
- GB-A- 2 223 891

## Beschreibung

Die Erfindung bezieht sich auf einen Verteilerschrank, insbesondere für Wohnanlagen, mit einem schachtelartigen Grundkörper, der von einem Mauerwerk aufzunehmen bestimmt ist, und der Grundkörper einen umlaufenden, auskragenden Bund aufweist, in dem eine Türe verschwenkbar gelagert ist.

Verteilerschränke dieser Art sind bekannt (siehe EP-A-0 730 329). In solchen Verteilerschränken sind Montageschienen festgelegt, an welchen elektrische Geräte angeordnet sind wie beispielsweise Sicherungsautomaten, Fehlerstromschutzschalter, Femschalter, Leistungsschalter, Steuergeräte u. dgl. mehr. Diese Verteilerschränke sind mit einer Türe verschließbar. Von diesem Verteilerschrank führen dann Leitungen zu Steckdosen, Schaltern, Sprechanlagen, Geräten u. dgl. mehr, die in einem Gebäude verteilt angeordnet und angebracht sind. Solche Verteilerschränke sind in der Regel im Eingangsbereich einer Wohnung vorgesehen. Diese Verteilerschränke sind rechteckig gestaltet, wobei die Breite und die Höhe im wesentlichen gleich groß sind (US 4 249 227 A; DE 77 30 710 U).

Ausgehend von diesem Stand der Technik zielt die Erfindung darauf ab, einen Verteilerschrank dieser Art zu verbessern, und zwar dahingehend, daß er nicht nur zur Verteilung von Leitungen im herkömmlichen Sinne dient, sondern auch einen Teil jener Geräte und Vorrichtungen aufzunehmen imstande ist, die in der Regel im Eingangsbereich einer Wohnung vorgesehen sind, wie Klingel, Gegensprechanlage, Steckdosen, Schalter und evtl. auch Auslässe und Anschlüsse für Antennen. Die Erfindung ist dadurch gekennzeichnet, daß das Verhältnis der Breite des Grundkörpers zu seiner Höhe etwa 1 10 beträgt und in der Türe Aussparungen vorgesehen sind zur Aufnahme von Geräten wie Steckdosen, Lichtschalter, Türklingeln, Gegensprechanlagen u. dgl. und daß eine Schmalfläche des Grundkörpers als Basisfläche vorgesehen ist.

Zur Veranschaulichung der Erfindung wird diese anhand der Zeichnung im folgenden näher beschrieben, ohne die Erfindung dadurch auf das gezeigte Ausführungsbeispiel einzuschränken. Es zeigen:
- Fig. 1: den Verteilerschrank von vorne und
- Fig. 2: von der Seite;
- Fig. 3: eine Draufsicht - Blickrichtung Pfeil A in Fig. 1;
- die Fig. 4, 5 und 6: den Grundteil in Seitensicht, Ansicht und Draufsicht;
- die Fig. 7 und 8: die Wanne in Seitensicht und Draufsicht;
- die Fig. 9 und 10: den umfangsgeschlossenen Rahmen in Seitensicht und im Querschnitt - Schnittlinie X-X in Fig. 9 und
- Fig. 11: einen Querschnitt nach der Linie XI-XI in Fig. 1.

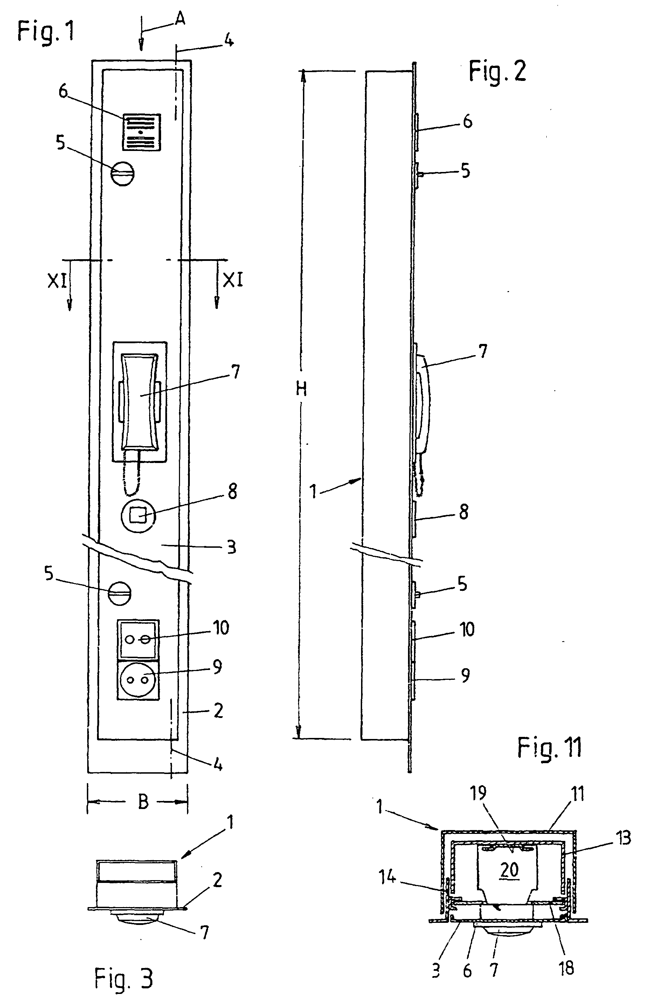

Der Verteilerschrank nach den Figuren 1 und 2 weist einen schachtelartigen Grundkörper 1 auf, der dazu vorgesehen ist, von einem Mauerwerk aufgenommen zu werden. Ferner ist ein umlaufender Bund 2 vorgesehen, der als Blendrahmen dient. In diesem umlaufenden Bund 2 ist die Türe 3 um eine vertikale Achse schwenkbar gelagert, diese vertikale Achse ist hier in Fig. 1 durch die strichpunktierte Linie 4 angedeutet. Mit verdrehbar gelagerten Riegelgliedern 5 wird diese Türe in ihrer Schließstellung arretiert. Die Breite B dieses Verteilerschrankes beträgt ca. 20 cm, seine Höhe ca. 200 cm. Dieser Verteilerschrank 1 ist also ca. zehnmal so hoch wie breit. In der Türe 3 dieses Verteilerschrankes sind verschiedene Aussparungen in unterschiedlichen Höhen angebracht, die der Aufnahme von elektrischen Gerätschaften dienen, beispielsweise einer Türklingel 6, einer Gegensprechanlage 7, eines Lichtschalters 8, Steckdosen 9 und eines Antennenauslasses 10. Diese Aufzählung sowie die gezeigte Anordnung ist als Beispiel zu verstehen und kann variiert werden.

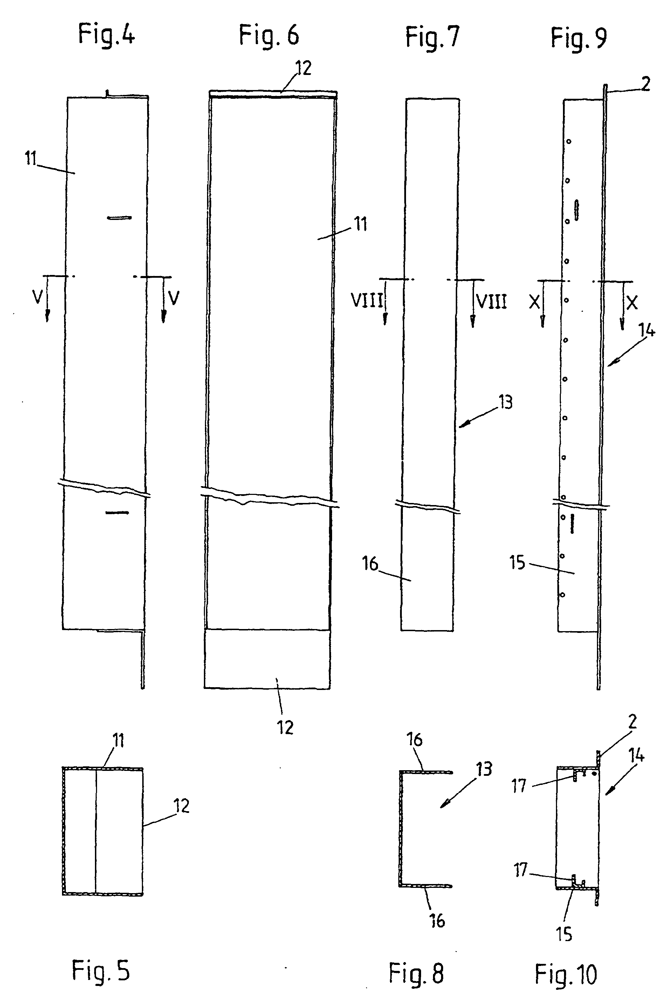

Im einzelnen besteht dieser Verteilerschrank aus einem rinnenartigen Grundteil 11 von U-förmigem Querschnitt, wobei an den beiden Enden aus Gründen der Stabilität Querholme 12 festgelegt sind. Dieser Grundteil 11 wird zweckmäßigerweise aus einem Blechstreifen gebogen und geformt. Des weiteren ist eine im Querschnitt ebenfalls U-förmige Wanne 13 aus einem elektrisch isolierenden Material vorgesehen. Der umfangsgeschlossene Rahmen 14 ist aus Metall gefertigt und besitzt L-förmige Rahmenschenkel, wobei der längere Abschnitt 15 mit der Wange 16 der Wanne 13 verbunden ist. Inseitig an den Längsseiten des Rahmens 14 sind im Querschnitt U-förmige Leisten 17 festgelegt, wobei die offenen Seiten dieser im Querschnitt U-förmigen Leisten 17 gegeneinander gerichtet sind. Die seitlichen Wangen dieser Leisten sind verschieden breit, wie Fig. 10 erkennen läßt. Die schmälere Wange der Leiste 17 liegt der offenen Seite des Verteilerschrankes benachbart und dient als Anschlag für die Türe 3. Die breite Wange der Leiste 17 dient als randseitige Auflage für mindestens eine Ausnehmungen aufweisende Abdeckung 18, welche elektrische Geräte 20 wie Sicherungsautomaten, Fehlerstromschalter, Schaltgeräte, Überwachungsgeräte u. dgl. abdeckt. Diese elektrischen Geräte 20 sind an einer Montageschiene 19 festgelegt, die ihrerseits am Boden der Wanne 13 befestigt ist.

Fig. 11 als Querschnitt durch den Verteilerschrank veranschaulicht diesen Aufbau: In den Rahmen 14 ist die Wanne 13 eingesetzt und mit dem Rahmen verbunden. Am Boden oder an der Rückseite der Wanne 13 ist eine Montageschiene 19 angeschraubt, auf welcher die elektrischen Geräte 20 befestigt sind. Bei diesen Geräten 20 handelt es sich um Sicherungsautomaten, Fehlerstromschutzschalter, Leitungsschutzschalter, Fernschalter, Schützen u. dgl. mehr. Auf der breiten Wange der U-förmigen Leiste 17 liegt eine Abdeckung 18 auf, die Ausspa. rungen besitzt, durch welche die Frontseiten der genannten elektrischen Geräte 20 sichtbar und zugänglich sind. Die schmale Wange der Leiste 17 dient als Türanschlag. Zu beiden Seiten der elektrischen Geräte 20 sind innerhalb der Wanne 13 längsverlaufende Hohlräume ausgespart, in diesen längsverlaufenden Hohlräumen können Leitungen untergebracht werden, die jedoch in Fig. 11 nicht gezeigt sind.

Der erfindungsgemäße Verteilerschrank nimmt einen erheblichen Teil jener Installationen auf, die in der Regel im Türbereich einer Wohnung vorgesehen werden und für welche in den Wänden üblicherweise Leitungsrohre verlegt werden müssen. Der Verteilerschrank nach der Erfindung erspart daher in erheblichem Umfang Installationsarbeiten vor Ort. Ein Verteilerschrank der erfindungsgemäßen Bauart wird zweckmäßigerweise seitlich einer Wohnungseinangstüre montiert.

### Legende zu den Hinweisziffern:

- 1: Grundkörper
- 2: Bund
- 3: Türe
- 4: strichpunktierte Linie
- 5: Riegelglieder
- 6: Türklingel
- 7: Gegensprechanlage
- 8: Lichtschalter
- 9: Steckdose
- 10: Antennenauslaß
- 11: Grundteil
- 12: Querholm
- 13: Wanne
- 14: Rahmen
- 15: Abschnitt
- 16: Wange
- 17: Leiste
- 18: Abdeckung
- 19: Montageschiene
- 20: elektrisches Gerät

## Patentansprüche

1. Verteilerschrank, insbesondere für Wohnanlagen, mit einem schachtelartigen Grundkörper (1), der von einem Mauerwerk aufzunehmen bestimmt ist, und der Grundkörper (1) einen umlaufenden, auskragenden Bund (2) aufweist, in dem eine Türe (3) verschwenkbar gelagert ist, **dadurch gekennzeichnet, daß** das Verhältnis der Breite (B) des Grundkörpers (1) zu seiner Höhe (H) etwa 1 : 10 beträgt und in der Türe (3) Aussparungen vorgesehen sind zur Aufnahme von Geräten wie Steckdosen (9), Lichtschalter (8), Türklingeln (6), Gegensprechanlagen (7) u. dgl. und daß eine Schmalfläche des Grundkörpers (1) als Basisfläche vorgesehen ist.

2. Verteilerschrank nach Anspruch 1, **dadurch gekennzeichnet, daß** er mehrteilig ausgebildet ist und einen umfangsgeschlossenen Rahmen (14) mit auskragendem Bund (2), eine vorzugsweise aus elektrisch isolierendem Material bestehende Wanne (13) und einen diese Wanne (13) und den Rahmen (14) aufnehmenden, rinnen- oder schachtelartigen Grundteil (11) besitzt und der Rand der Wanne (13) am Rahmen (14) festgelegt ist und Rahmen (14) und Wanne (13) in den Grundteil (11) eingesetzt sind.

3. Verteilerschrank nach Anspruch 2, **dadurch gekennzeichnet, daß** die Schenkel des umfangsgeschlossenen Rahmens (14) einen L-förmigen Querschnitt besitzen, wobei der längere Abschnitt des L-förmigen Schenkels mit der Wanne (13) verbunden ist.

4. Verteilerschrank nach Anspruch 2, **dadurch gekennzeichnet, daß** inseitig an den Längsseiten des Rahmens (14) im Querschnitt U-förmige Leisten (17) festgelegt sind, wobei die offenen Seiten dieser U-förmigen Leisten (17) gegeneinander gerichtet sind.

5. Verteilerschrank nach Anspruch 4, **dadurch gekennzeichnet, daß** die seitlichen Wangen der im Querschnitt U-förmigen Leisten (17) unterschiedlich breit sind.

6. Verteilerschrank nach Anspruch 5, **dadurch gekennzeichnet, daß** die schmälere Wange der Leiste (17) der offenen Seite des Verteilerschrankes benachbart liegt und als Anschlag für die Türe (3) dient.

7. Verteilerschrank nach Anspruch 5, **dadurch gekennzeichnet, daß** die breite Wange der Leiste (17) als randseitige Auflage für mindestens eine Ausnehmungen aufweisende Abdeckung (18) dient, welche elektrische Geräte wie Sicherungsautomaten, Fehlerstromschalter, Schaltgeräte, Überwachungsgeräte u. dgl. abdeckt, welche an Montageschienen (19) festgelegt sind, die am Boden der Wanne (13) befestigt sind.

8. Verteilerschrank nach einem der Ansprüche 1 bis 7, **dadurch gekennzeichnet, daß** seine Breite (B) ca. 20 cm und seine Höhe (H) ca. 200 cm beträgt.

9. Verteilerschrank nach einem der Ansprüche 1 bis 8, **dadurch gekennzeichnet, daß** er seitlich einer Wohnungseingangstüre montiert ist.

## Claims

1. A distribution cabinet, in particular for domestic installations, comprising a box-like base body (1) intended to be held by masonry, and the base body (1) has a peripheral projecting flange (2) in which a door (3) is pivotably mounted, **characterised in that** the ratio of the width (B) of the base body (1) to its height (H) is about 1 : 10, and cutouts are provided in the door (3) for holding equipment such as sockets (9), light switches (8), doorbells (6), intercoms (7) and the like, and **in that** a narrow surface of the base body (1) is provided as the base surface.

2. A distribution cabinet according to Claim 1, **characterised in that** it is of multiple-part construction and has a peripherally closed frame (14) with a projecting flange (2), a trough (13) preferably made of electrically insulating material, and a channel- or box-like base part (11) holding this trough (13) and the frame (14), and the margin of the trough (13) is fixed to the frame (14) and the frame (14) and the trough (13) are inserted in the base part (11).

3. A distribution cabinet according to Claim 2, **characterised in that** the sides of the peripherally closed frame (14) have an L-shape cross-section, the longer portion of the L-shape side being connected to the trough (13).

4. A distribution cabinet according to Claim 2, **characterised in that** strips (17), U-shape in cross-section, are fixed to the inside of the longitudinal sides of the frame (14), the open sides of these U-shape strips (17) being directed towards one another.

5. A distribution cabinet according to Claim 4, **characterised in that** the lateral side pieces of the strips (17) which are U-shape in cross-section are of different widths.

6. A distribution cabinet according to Claim 5, **characterised in that** the narrower side piece of the strip (17) is located adjacent to the open side of the distribution cabinet and serves as a stop for the door (3).

7. A distribution cabinet according to Claim 5, **characterised in that** the wide side wall of the strip (17) serves as a support on the marginal side for at least one cover (18) comprising recesses which covers electrical equipment such as automatic circuit breakers, fault-current switches, switchgear, monitoring devices and the like, which are fixed on mounting bars (19) secured to the base of the trough (13).

8. A distribution cabinet according to one of Claims 1 to 7, **characterised in that** its width (B) is about 20 cm and its height (H) about 200 cm.

9. A distribution cabinet according to one of Claims 1 to 8, **characterised in that** it is mounted at the side of an entrance door to a dwelling.

## Revendications

1. Armoire de distribution, en particulier pour installations d'habitations, comportant un corps de base (1) en forme de boîte, qui est destiné à être reçu par un mur, et dans lequel le corps de base (1) présente une embase périphérique (2) en porte-à-faux, dans laquelle une porte (3) est montée à pivotement, **caractérisée en ce que** le rapport de la largeur (B) du corps de base à sa hauteur (H) est plus ou moins de 1:10 et il est prévu dans la porte (3) des évidements pour recevoir des appareils tels que des prises de courant (9), des commutateurs d'éclairage (8), des sonnettes de portes (6), des interphones (7) et similaires, et **en ce qu'**il est prévu comme surface de base une face étroite du corps de base (1).

2. Armoire de distribution selon la revendication 1, **caractérisée en ce qu'**elle est conformée en plusieurs parties et possède un cadre (14) fermé sur la périphérie et pourvu d'une embase (2) en porte-à-faux, un réceptacle (13) constitué de préférence d'un matériau isolant de l'électricité et une partie de base (11) en forme de rigole ou de boîte recevant ce réceptacle (13) et le cadre (14) et **en ce que** le bord du réceptacle (13) est fixé sur le cadre (14) et le cadre (14) et le réceptacle (13) sont insérés dans la partie de base (11).

3. Armoire de distribution selon la revendication 2, **caractérisée en ce que** les branches du cadre (14) fermé sur la périphérie possèdent une section transversale en forme de L, la section la plus longue de la branche en forme de L étant reliée au réceptacle (13).

4. Armoire de distribution selon la revendication 2, **caractérisée en ce que**, à l'intérieur, sur les côtés longitudinaux du cadre (14), sont fixées des moulures (17) de forme en U en coupe transversale, les côtés ouverts de ces moulures (17) en forme de U étant dirigés l'un vers l'autre.

5. Armoire de distribution selon la revendication 4, **caractérisée en ce que** les joues latérales des moulures (17) en forme de U en coupe transversale ont différentes largeurs.

6. Armoire de distribution selon la revendication 5, **caractérisée en ce que** la joue la plus étroite de la moulure (17) est voisine du côté ouvert de l'armoire de distribution et sert de butée pour la porte (3).

7. Armoire de distribution selon la revendication 5, **caractérisée en ce que** la joue large de la moulure (17) sert d'appui périphérique pour au moins un couvercle (18) présentant des évidements, qui recouvre des appareils électriques tels que des coupe-circuit automatiques, des interrupteurs de protection contre les courts-circuits, des commutateurs, des appareils de surveillance et similaires, qui sont fixés sur des rails de montage (19), qui sont eux-mêmes fixés sur le fond du réceptacle (13).

8. Armoire de distribution selon l'une quelconque des revendication 1 à 7, **caractérisée en ce que** sa largeur (B) est d'environ 20 cm et sa hauteur (H) d'environ 200 cm.

9. Armoire de distribution selon l'une quelconque des revendication 1 à 8, **caractérisée en ce qu'**elle est montée latéralement par rapport à une porte d'entrée d'habitation.
